Europäisches Patentamt

European Patent Office

Office européen des brevets

(11) Numéro de publication: **0 230 190**

**A1**

(12)
# DEMANDE DE BREVET EUROPEEN

(21) Numéro de dépôt: **86402856.8**

(22) Date de dépôt: **19.12.86**

(51) Int. Cl.4: **H01R 13/24** , **G11B 5/52**

(30) Priorité: **20.12.85 FR 8518980**

(43) Date de publication de la demande:
**29.07.87 Bulletin 87/31**

(84) Etats contractants désignés:
**DE GB IT**

(71) Demandeur: **ENERTEC SOCIETE ANONYME**
**12, Place des Etats-Unis**
**F-92120 Montrouge(FR)**

(72) Inventeur: **Delacou, Jean-Michel**
**175, rue Filliette Nicolas Philibert**
**F-92500 Rueil-Malmaison(FR)**

(74) Mandataire: **Monod, Jean-Yves et al**
**GIERS SCHLUMBERGER 12 Place des**
**Etats-Unis**
**F-92124 Montrouge Cédex(FR)**

(54) **Connecteur électrique à haute densité et utilisation sur un dispositif d'enregistrement magnétique à têtes tournantes.**

(57) Le connecteur comprend: un arbre central (7) à la périphérie duquel des éléments conducteurs linéaires sont disposés longitudinalement, au moins dans une zone de contact (50, 51) prévue sur l'arbre; un emsemble (22) de conducteurs (43) disposés radialement et ayant des extrémités conductrices élastiques précambrées sensiblement selon une partie de surface torique centrée et tournée vers l'arbre (7) à un certain niveau de la zone de contact; des joints élastiques toriques (27, 28) centrés sur l'arbre (7) et entourant lesdites extrémités; une presse (24, 29) de compression radiale desdits joints toriques de manière à entraîner, lors de ladite compression des joints, les extrémités conductrices radialement vers l'intérieur jusqu'à un contact de pression avec les éléments conducteurs longitudinaux de l'arbre. Ce connecteur équipe un rotor portant les têtes magnétiques d'un dispositif d'enregistrement et de lecture sur bande magnétique.

Fig-2

## CONNECTEUR ELECTRIQUE A HAUTE DENSITE ET UTILISATION SUR UN DISPOSITIF D'ENREGIS-
## TREMENT MAGNETIQUE A TETES TOURNANTES

L'invention concerne un connecteur électrique à haute densité, notamment apte à équiper un enregistreur à têtes magnétiques tournantes.

On connaît des dispositifs d'enregistrement et de lecture sur bande magnétique (en particulier des enregistrements video), du type dans lesquels une bande défile hélicoïdalement devant une fente séparant deux tambours tandis que des têtes magnétiques portées par une rosace d'un rotor défilent à grande vitesse devant la fente. Un dispositif de ce type est décrit dans le SMPTE Journal de décembre 1979, vol. 88, no. 12, p. 823 et suivante (cf. notamment la figure 13 montrant le rotor avec ses transformateurs tournants).

Du fait de la précision extrême requise pour les déplacements des têtes magnétiques, l'arbre du rotor est monté dans ses roulements à bille et subit des opérations d'usinage très rigoureuses après lesquelles, il doit être considéré comme indémontable. Or, les têtes magnétiques qui défilent à une vitesse linéaire élevée (par exemple 60 m/s) ont une durée de vie plus courte que l'ensemble mécanique de l'appareil et doivent donc être changées lors de la maintenance. Les têtes sont donc pévues sur un ensemble démontable du rotor. Des transformateurs tournants permettent aux signaux électriques de circuler du rotor vers la partie fixe de l'appareil et inversement. Dans les dispositifs connus, les têtes magnétiques sont reliées par des liaisons définitives aux transformateurs tournants du rotor, de sorte que ceux-ci doivent donc être logés sur l'ensemble démontable du rotor. Par conséquent, la rosace porte-tête et les transformateurs sont placés en porte-à-faux sur l'arbre du rotor, par rapport aux paliers. Il peut en résulter, à des vitesses de rotation élevées, des problèmes de flexion de l'arbre du rotor. Ces problèmes ne sont généralement pas perceptibles pour les appareils de video où le nombre de voies nécessaires, et donc le nombre de transformateurs est très réduit.

En revanche, pour des applications qui exigeraient un nombre de voies et de transformateurs élevé (par exemple enregistrement de signaux numériques à des cadences élevées), il n'est plus possible de mettre les transformateurs en porte-à-faux. Il serait souhaitable de les disposer sur l'arbre entre les paliers, à condition qu'il soit possible d'établir une liaison facilement déconnectable entre les têtes magnétiques et les transformateurs, une telle liaison devant être à haute densité compte tenu de la place restreinte disponible, et résister à des vitesses de rotation très élevées (par exemple de 4000 jusqu'à environ 13000 trs/min.).

Le but de l'invention est de proposer un connecteur répondant à ces exigences.

A cet effet, l'invention propose un connecteur qui comprend :

-une pièce centrale comportant un arbre à la périphérie duquel des éléments conducteurs linéaires sont disposés longitudinalement, au moins dans une zone de contact prévue sur l'arbre,

- une pièce radiale comportant au moins un ensemble de conducteurs disposés radialement et avant des extrémités conductives élastiques précambrées sensiblement selon une partie de surface torique centrée et tournée vers l'arbre à un certain niveau de la zone de contact, chaque extrémité étant dans un plan radial respectif de ladite surface torique, plan contenant également un conducteur longitudinal, et à une certaine distance radiale desdits conducteurs longitudinaux de l'arbre.

-un joint élastique torique centré sur l'arbre au même niveau de la zone de contact, à une distance radiale des conducteurs longitudinaux égale ou supérieure à celle desdites extrémités conductrices, ledit joint entourant lesdites extrémités,

-un dispositif de compression radiale dudit joint torique de manière à entraîner, lors de ladite compression du joint, les extrémités conductrices radialement vers l'intérieur jusqu'à un contact de pression avec les éléments conducteurs longitudinaux de l'arbre.

On réalise ainsi une connexion électrique entre le réseau de conducteurs longitudinaux et le réseau de conducteurs radiaux, connexion facile et rapide à établir aussi bien qu'à supprimer (en supprimant l'action du dispositif de compression radiale).

Il est entendu que la qualification de radiaux et longitudinaux pour les conducteurs n'a de sens qu'au voisinage de la zone de contact ; au-delà, l'agencement des conducteurs dépend de l'application visée.

Avantageusement, le dispositif de compression radiale est constitué par une presse à surface conique. Un système vis-écrou permet de rapprocher ou d'éloigner les surfaces antagonistes de la presse.

Avantageusement, le connecteur comporte un moyen détrompeur pour assurer la coïncidence angulaire entre les conducteurs longitudinaux et les extrémités conductrices radiales.

Avantageusement, les conducteurs longitudinaux sont disposés dans des cannelures longitudinales de l'arbre. Les cannelures peuvent loger deux étages radiaux ou plus de conducteurs, la zone de contact comprenant alors aussi deux étages de contact ou plus. Notamment dans ce cas, il est avantageux que la pièce radiale comporte deux ensembles de conducteurs radiaux accolés associés à deux joints élastiques toriques.

Pour assurer leur élasticité, les conducteurs radiaux sont en alliage de cuivre et de béryllium, dans des proportions respectives avantageuses de 98% et 2%.

Le connecteur de l'invention est particulierement apte à équiper le rotor porte-tête d'un dispositif d'enregistrement et de lecture magnétique du type pécité.

Avantageusement, les conducteurs longitudinaux sont reliés au bobinage de transformateurs tournants logés deux paliers de support de l'arbre du rotor.

Avantageusement, les conducteurs radiaux sont formés sur un disque de contact serré entre deux plateaux de rotor.

D'autres avantages et caractéristiques ressortiront de la description suiante d'un mode préféré de réalisation. Il sera fait référence aux dessins annexés sur lesquels :

-la figure 1 est une coupe longitudinale d'un dispositif d'enregistrement/lecture de bande magnétique incorporant le connecteur de l'invention ;

-la figure 2 est une vue plus détaillée d'une partie de la figure 1 montrant mieux le connecteur ;

-la figure 3 est une perspective partielle - schématique de la partie radale du connecteur ;

-la figure 4 est une coupe schématique partielle du connecteur montrant deux étapes de la compression radiale du joint torique ;

-la figure 5 est une vue partielle montrant le détail d'une zone de contact à deux étages sur l'arbre du rotor.

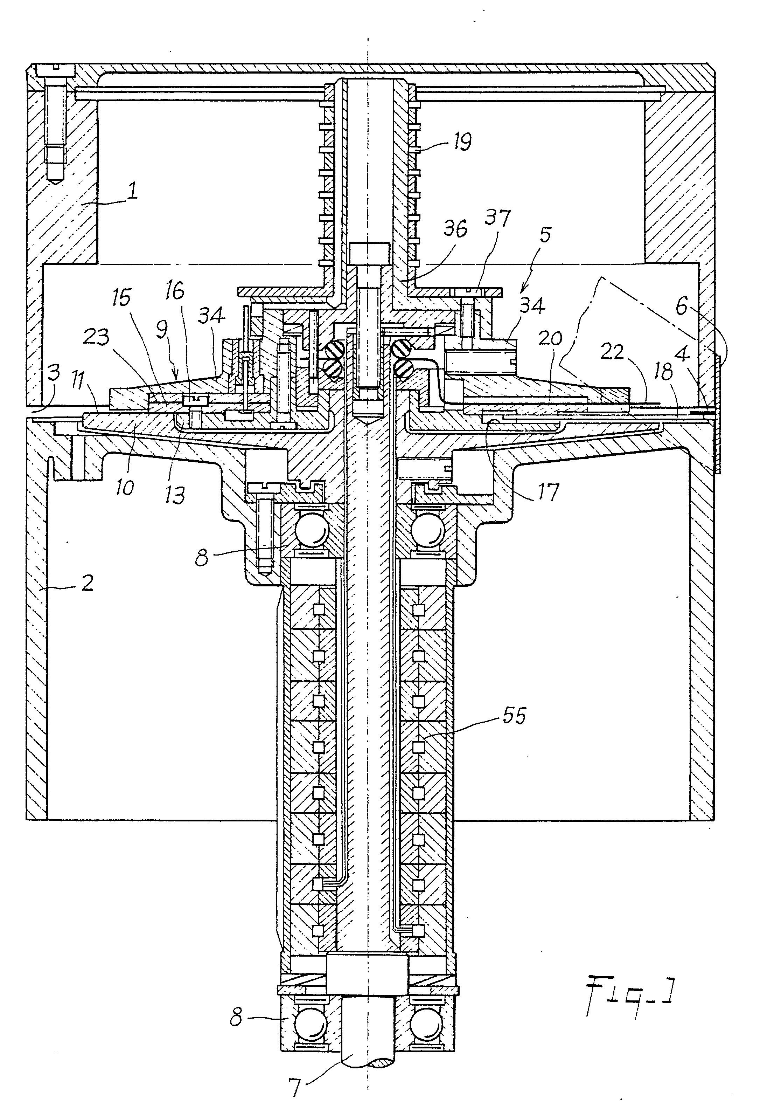

La figure 1 montre deux tambours creux fixes inférieur 1 et supérieur 2 ménageant entre eux une fente périphérique 3. Un certain nombre de têtes magnétiques sont montéesà la périphérie d'un rotor 5 lui-même monté à l'intérieur des tambours 1 et 2.

Les têtes 4 défilent successivement, au travers de la fente 3, devant une bande magnétique 6, elle-même défilant en hélice sur les tamburs 1 et 2 devant la fente 3. Le rotor comporte un arbre 7 monté en rotation grâce à des roulements à bille 8 convenablement fixés au bâti de l'appareil ou aux tambours (eux-même fixés au bâti), et une roue 9 porte-têtes, montée en porte-à-faux par rapport aux roulements à bille 8.

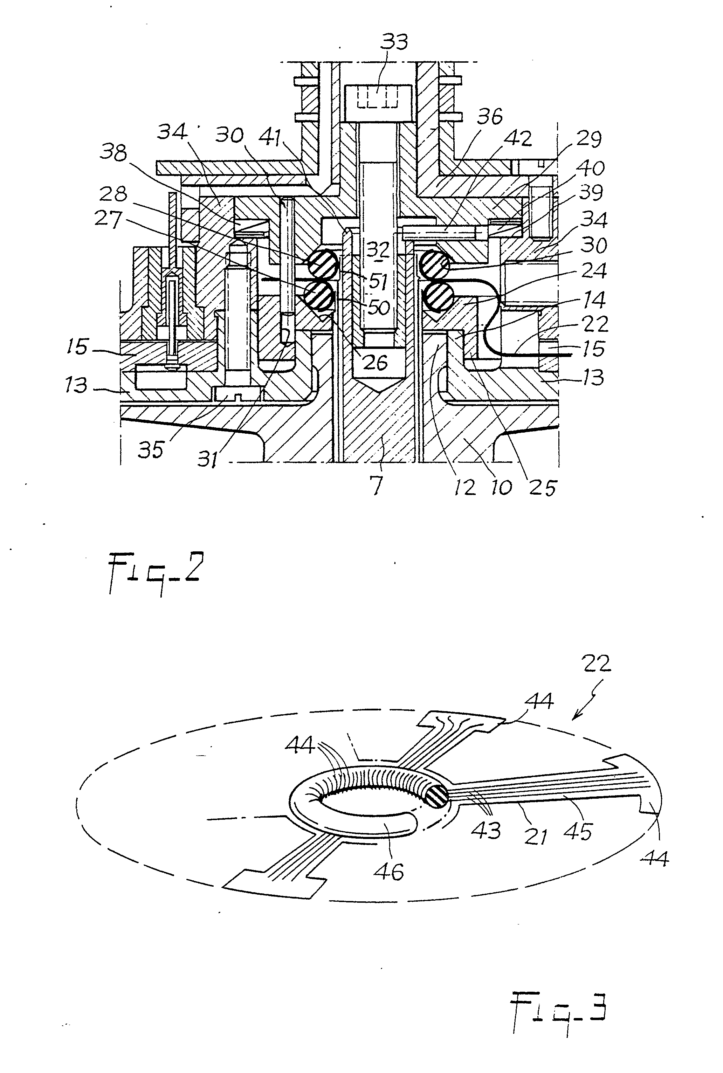

La roue 9 comporte un plateau inférieur 10 fretté ou collé sur l'arbre 7, ayant une face plane 11 dans laquelle un logement annulaire est creusé et une collerette centrale 12 (fig. 2) à contour cylindrique usinée avec précision.

Le plateau 10 est destiné à recevoir une couronne porte-tête comprenant un flasque inférieur 13 à moyeu 14 et un flasque supérieur 15, serrés l'un contre l'autre par des vis 16 réparties circonférentiellement. Des cavités radiales 17 sont ménagées sur les faces en regard des flasques 13, 15 pour y loger et fixer une extrémité de bras radiaux 18 porte-têtes. Ces bras 18 sont constitués par des bilames permettant un léger déplacement vertical des têtes. Des bagues collectrices 19 placées au bout de l'arbre 7 sont associés à un dispositif d'alimentation électrique non repésenté, et transmettant via des conducteurs non représentés l'énergie électrique alimentant les bilames.

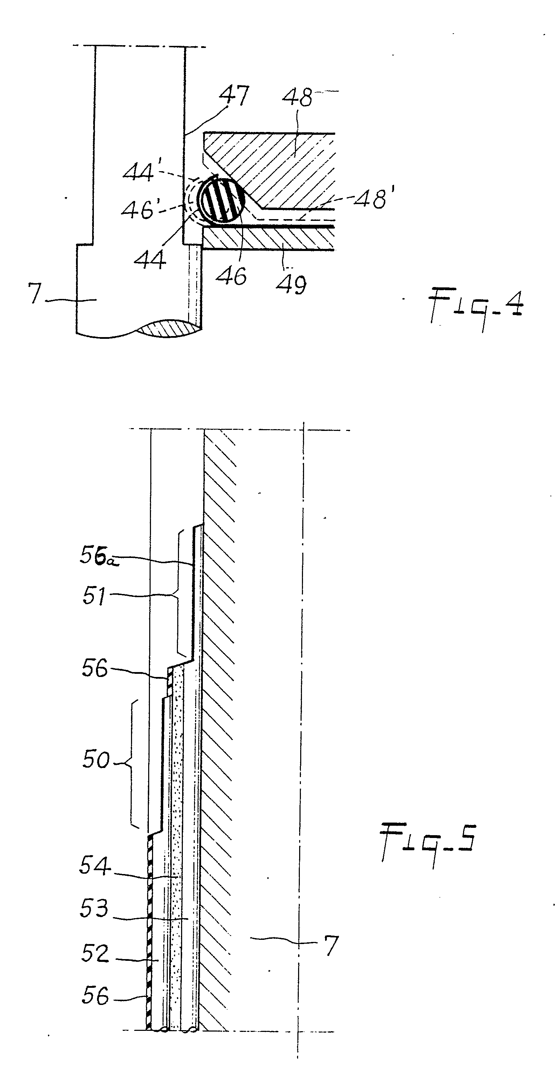

Le flasque supérieur 15 comporte sur sa face supérieure des logements radiaux 20 destinés à recevoir les bras 21 de deux ensembles radiaux 22 de conducteurs (fig. 3) qui seront décrits ultérieurement plus en détail.

La couronne porte-tête 13-15 est centrée coaxialement au plateau 10 par la coopération de la collerette 12 et du moyeu 14. La couronne 13-15 porte sur le plateau grâce à des surfaces de butée 23.

Une contrepresse annulaire 24 coiffe le moyeu 12 grâce à une bride périphérique 25 de centrage et comporte une paroi d'appui tronconique 26 pour un joint torique élastique 27.

Un joint torique 28 est superposé sur le joint 27, avec deux étages de brins de connexion entre les joints.

Une presse 29 à paroi d'appui tronconique 30 surmonte le joint 28. La presse 29 est coaxiale et solidaire en rotation avec la contrepresse 24 grâce à des goupilles cylindriques 47 bloquées dans la presse mais pouvant coulisser axialement dans des logements 31 de la contrepresse. Un système vis-écrou 32 lié à l'axe 7 permet, en vissant la tête creuse 33, de rapprocher la presse 29 de l'axe 7.

Un plateau supérieur 34 est fixé aux flasques 13, 15 par les vis 35, tandis qu'un manchon 36 destiné à porter les bagues collectrices 19, est fixé au plateau supérieur 34 par une bride et des vis 37.

Le plateau 34 comporte une cavité cylindrique 38 permettant à la presse 29 de se déplacer axialement, et un épaulement 39 servant d'appui à un ressort 40 en rondelles ondulées sur lequel s'appuie la presse 29.

L'extrémité 41 de l'arbre 7 est creuse, et une encoche de son bord permet d'indexer une goupille 42 angulairement liée à la presse 29.

Si l'on se reporte aux figures 3 et 4, on y voit un ensemble radial 22 de conducteur, d'une forme légèrement simplifiée pour clarifier les explications.

L'ensemble 22, sous une forme générale de disque, comporte un certain nombre de conducteurs 43 rassemblés en bras radiaux 21 dont les extrémités 44 éloignées du centre peuvent être élargies pour opérer plus facilement les connexions (non repésentées) avec les têtes magnétiques 4.

Vers le centre de l'ensemble 22, les conducteurs 43 se rassemblent et se terminent par des brins élastiques précambrés 44.

Les conducteurs 43, en alliage Cu.Be à haute limite élastique, sont avantageusement obtenus par découpe chimique, et sont serrés entre deux couches d'isolant souple 45 (par exemple en "Kapton" -marque déposée).

La cambrure torique des brins centraux 44 tend à faire épouser à ceux-ci une forme voisine de celle du joint 46, lequel joint est au repos de diamètre intérieur légèrement supérieur au diamètre extérieur de la zone de contact 47 prévue sur l'arbre 7. De même, la cambrure des brins 44 est telle qu'au repos lesdits brins sont écartés de la zone de contact 47 (cf. Fig. 4). Le joint 46 est placé entre les éléments antagonistes d'une presse à paroi conique, représentée simplement sur la figure 4 par une presse conique 48 et un plateau antagoniste 49.

Lorsque la presse conique 48 se rapproche du plateau 49 pour adopter la position 48' (en pointillés), elle comprime le joint 46 qui prend la position 46' dans laquelle il vient appuyer les brins 44' contre la zone de contact 47 de l'arbre 7 et donc réaliser · la connexion entre les conducteurs présents sur l'arbre et les conducteurs de l'ensemble 22.

Si l'on se reporte à nouveau aux figures 1 et 3, on constate que deux ensembles 22 sont accolés et que pour des raisons de logement dans la zone, leur géométrie vers le centre est adaptée à l'environnement.

Les brins centraux des deux ensembles 22 sont dirigés en sens opposé. La zone de contact comporte deux étages de contact 50 et 51 de diamètre différents. Les diamètres des joints 27 et 28 sont également légèrement différents. Lorsqu'on visse la tête creuse 33, les joints 27 et 28 sont comprimés entre les parois coniques de la presse 29 et de la contrepresse 24 de sorte qu'ils viennent appuyer les brins centraux des deux ensembles 22 sur leur étage respectif de la zone de contact.

La figure 5 montre le détail de l'agencement des zones de contact sur l'arbre 7.

L'arbre 7, au moins sur sa portion destinée à recevoir les conducteurs (c'est-à-dire de la zone de contact aux transformateurs tournants) est constitué d'un bâton d'alumine comportant des cannelures à sa périphérie (par exemple 32 cannelures sur un axe de 6 mm de diamètre). Chaque cannelure loge deux conducteurs 52, 53, séparés par un isolant 54 (par exemple du "Kapton"), véhiculant le courant électrique respectivement vers et depuis les transformateurs tournants 55 qui leur sont associés.

Le fil de bobinage radialement intérieur 53 et la gaine de résine extérieure 56 sont usinés sur la moitié de leur épaisseur, à leur extrémité correspondant à la zone de contact 51 et recouverts d'un dépôt électrolytique d'or 55, formant un étage de contact de 2 mm de long sur 0,3 mm de large destiné à un brin central de contact d'un ensemble 22.

De même, le fil radialement extérieur 52 forme, après usinage, un second étage de contact au niveau de la zone de contact 50.

· · ·

## Revendications

1. Connecteur électrique à haute densité, caractérisé en ce qu'il comprend :
-une pièce centrale comportant un arbre (7) à la périphérie duquel des éléments conducteurs linéaires (52, 53) sont disposés longitudinalement, au moins dans une zone de contact (50, 51) prévue sur l'arbre,
-une pièce radiale comportant au moins un ensemble de conducteurs (43) disposés radialement et ayant des extrémités (44) conductrices élastiques précambrées sensiblement selon une partie de surface torique centrée et tournée vers l'arbre (7) à un certain niveau de la zone de contact, chaque extrémité (44) étant dans un plan radial respectif de ladite surface torique, plan contenant également un conducteur longitudinal (52, 53), et à une certaine distance radiale desdits conducteurs longitudinaux (52, 53) de l'arbre,
-un joint élastique torique (46) centré sur l'arbre (7) au même niveau de la zone de contact, à une distance radiale des conducteurs longitudinaux égale ou supérieure à celle desdites extrémités conductrices (44), ledit joint (46) entourant lesdites extrémités,
-un dispositif (48, 49) de compression radiale dudit joint torique (46) de manière à entraîner, lors de ladite compression du joint (46), les extrémités conductrices (44) radialement vers l'intérieur jusqu'à un contact de pression avec les éléments conducteurs longitudinaux (52, 53) de l'arbre.

2. Connecteur selon la revendication 1, caractérisé en ce que le dispositif de compression radiale (48, 49) est constitué par une presse à surface conique.

3. Connecteur selon l'une quelconque des revendications précédentes, caractérisé en ce qu'il comporte un moyen détrompeur (42) pour assurer la coïncidence angulaire entre les conducteurs longitudinaux (52, 53) et les extrémités conductrices radiales (44).

4. Connecteur selon l'une quelconque des revendications précédentes, caractérisé en ce que les conducteurs longitudinaux (52, 53) sont disposés dans des cannelures longitudinales de l'arbre (7).

5. Connecteur selon l'une quelconque des revendications précédentes, caractérisé en ce que la pièce radiale comporte deux ensembles (22) de conducteurs radiaux accolés associés à deux joints élastiques toriques (27, 28).

6. Connecteur selon l'une quelconque des revendications précédentes, caractérisé en ce que les conducteurs radiaux sont en alliage de cuivre et de béryllium.

7. Utilisation du connecteur selon l'une quelconque des revendications précédentes, caractérisé en ce que le connecteur équipe un rotor (5) portant les têtes magnétiques (4) d'un dispositif d'enregistrement et de lecture sur bande magnétique.

8. Utilisation selon la revendication 7, caractérisée en ce que les conducteurs longitudinaux (52, 53) sont reliés au bobinage de transformateurs (55). tournants logés entre deux paliers (8) de support de l'arbre (7) du rotor (5).

9. Utilisation selon l'une quelconque des revendications 7 ou 8, caractérisé en ce que les conducteurs radiaux sont formés sur un disque (22) de contact serré entre deux plateaux (13, 34) du rotor (5).

Fig. 1

Fig-2

Fig-3

47
48
44'
46'
44
46
49
48'
7

**Fig-4**

56a
51
56
50
54
53
52
56
7

**Fig-5**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | IBM TECHNICAL DISCLOSURE BULLETIN, vol. 22, no. 4, septembre 1979, page 1531, New York, US; F.A. ALMQUIST: "Zero insertion force socket for grid modules" * En entier * | 1,2 | H 01 R   13/24 G 11 B    5/52 |
| | --- | | |
| A | US-A-3 179 909  (W.J. CHENEY) * Colonne 3, lignes 4-22; figure 1 * | 1,4,7, 8 | |
| | --- | | |
| A,D | SMPTE JOURNAL, vol. 88, no. 12, décembre 1979, pages 823-831, New York, US; H.L. ZAHN: "The BCN system for magnetic recording of television programs" * Figures 14,15 * | 1 | |
| | ----- | | |

DOMAINES TECHNIQUES
RECHERCHES (Int. Cl.4)

G 11 B    5/00
H 01 R    4/00
H 01 R    9/00
H 01 R   13/00
H 01 R   33/00
H 01 R   11/00

Le présent rapport de recherche a été établi pour toutes les revendications

| Lieu de la recherche | Date d'achèvement de la recherche | Examinateur |
|---|---|---|
| LA HAYE | 28-03-1987 | RIEUTORT A.S. |